# EUROPEAN PATENT APPLICATION

(11) **EP 4 838 671 A1**
(43) Date of publication of application: **11.11.2026**
(21) Application number: 26170781.4
(22) Date of filing: 03.04.2026
(51) Int. Cl.: H01M 50/46, H01M 4/13, H01M 10/0525, H01M 10/0583, H01M 10/0585, H01M 4/02

(54) **ELECTRODE STACK AND METHOD FOR MANUFACTURING ELECTRODE STACK**

(30) Priority: 08.05.2025 JP 2025078256
(71) Applicant: Toyota Jidosha Kabushiki Kaisha, Toyota-shi, Aichi-ken 471-8571 (JP)
(72) Inventor: NAKANO, Takahiko, TOYOTA-SHI, AICHI-KEN, 471-8571 (JP); SHIMURA, Yosuke, TOYOTA-SHI, AICHI-KEN, 471-8571 (JP); SAKASHITA, Yasuhiro, TOYOTA-SHI, AICHI-KEN, 471-8571 (JP); IKEYAMA, Suguru, TOYOTA-SHI, AICHI-KEN, 471-8571 (JP); HIRUKAWA, Tomofumi, TOYOTA-SHI, AICHI-KEN, 471-8571 (JP); KATO, Kazuhito, TOYOTA-SHI, AICHI-KEN, 471-8571 (JP)
(74) Representative: Cabinet Beau de Loménie

(57) **Abstract**

An electrode stack (10) includes: a plurality of electrode sheets stacked along a first direction; and a separator (40) that is elongated and extends in a zigzag manner between the electrode sheets. Each of the electrode sheets includes a current collector foil, and an electrode active material layer (24a) provided on one surface of the current collector foil and including a principal surface (25a) that faces the separator in the first direction. Part of the principal surface of the electrode active material layer is joined to the separator via a joining agent (50). The other part of the principal surface of the electrode active material layer faces the separator without intermediation of the joining agent.

## Description

### BACKGROUND OF THE INVENTION

### 1. Field of the Invention

The technology disclosed in the present specification relates to an electrode stack for a battery and a method for manufacturing the electrode stack.

### 2. Description of Related Art

Japanese Unexamined Patent Application Publication No. 2018-116778 (JP 2018-116778 A) describes an electrode sheet. The electrode sheet includes a current collector foil and an electrode active material layer provided on one surface of the current collector foil. A solution containing an adhesive is applied to the entire surface of the electrode active material layer as a joining agent for a separator.

### SUMMARY OF THE INVENTION

An electrode stack is manufactured by alternately stacking electrode sheets and separators. In this case, when a joining agent is provided on the surface of the electrode active material layer, positional misalignment of the electrode sheet relative to the separator is suppressed. When the electrode stack functions as a battery, charge carriers move between the electrode active material layer and the separator. In this case, when a joining agent is provided on the entire surface of the electrode active material layer as in the case of the related-art electrode sheet, the charge carriers necessarily pass through the joining agent. The movement of the charge carriers is hindered by the joining agent, resulting in an increase in the internal resistance of the battery.

In view of the above circumstances, the present specification provides a technology for reducing the influence of a joining agent on the movement of charge carriers while suppressing positional misalignment of an electrode sheet relative to a separator.

The technology disclosed in the present specification is embodied in an electrode stack. According to a first aspect, an electrode stack includes: a plurality of electrode sheets stacked along a first direction; and a separator that is elongated and extends in a zigzag manner between the electrode sheets. Each of the electrode sheets includes a current collector foil, and an electrode active material layer provided on one surface of the current collector foil and including a principal surface that faces the separator in the first direction. Part of the principal surface of the electrode active material layer is joined to the separator via a joining agent. The other part of the principal surface of the electrode active material layer faces the separator without intermediation of the joining agent.

In the electrode stack described above, part of the principal surface of the electrode active material layer is joined to the separator via the joining agent. This suppresses positional misalignment of the electrode sheet relative to the separator. The other part of the principal surface of the electrode active material layer faces the separator without intermediation of the joining agent. Thus, at least part of charge carriers can move between the electrode active material layer and the separator without passing through the joining agent. Compared to a related-art configuration in which the joining agent is present on the entire surface of the electrode active material layer, the movement of the charge carriers is less likely to be hindered by the joining agent, and the internal resistance of a battery is reduced. In this way, only part of the principal surface of the electrode active material layer is joined to the separator via the joining agent, thereby reducing the influence of the joining agent on the movement of the charge carriers while suppressing the positional misalignment of the electrode sheet relative to the separator.

In a second aspect, in the first aspect, the electrode active material layer may further include particulate electrode active materials, and binders that bind the particulate electrode active materials together. In this case, an electrical resistance of a material for the joining agent may be smaller than an electrical resistance of a material for the binders. With this configuration, the internal resistance of the battery can be further reduced.

In a third aspect, in the first or second aspect, the principal surface of the electrode active material layer may include protrusions and recesses provided by particulate electrode active materials. In this case, the joining agent may be provided on the principal surface of the electrode active material layer at a portion protruding toward the separator. The joining agent may be omitted on the principal surface of the electrode active material layer at a portion spaced away from the separator. When the principal surface of the electrode active material layer includes the protrusions and the recesses described above, a gap is formed between the joining agent and the separator at a portion spaced away from the separator (i.e., the recesses out of the protrusions and the recesses) even if the joining agent is provided on the entire principal surface. In other words, only the portion protruding toward the separator (i.e., the protrusions out of the protrusions and the recesses) is joined to the separator via the joining agent. The joining agent provided at the portion spaced away from the separator (i.e., the recesses out of the protrusions and the recesses) does not function as the joining agent, but still hinders the movement of the charge carriers. For this reason, it is appropriate that the joining agent be provided on the principal surface of the electrode active material layer only at the portion protruding toward the separator (i.e., the protrusions out of the protrusions and the recesses). Thus, it is possible to both suppress the positional misalignment of the electrode sheet relative to the separator and reduce the influence of the joining agent on the movement of the charge carriers.

In a fourth aspect, in any one of the first to third aspects, the electrode active material layer may further include a side surface that faces the separator in a second direction orthogonal to the first direction. In this case, at least part of the side surface of the electrode active material layer may be joined to the separator via the joining agent. With this configuration, it is possible to further suppress the misalignment of the electrode sheet relative to the separator.

The technology disclosed in the present specification is also embodied in a method for manufacturing an electrode stack. For example, in a fifth aspect, the method includes: preparing a plurality of electrode sheets each including a joining agent; and alternately stacking, along a first direction, the electrode sheets each including the joining agent and portions of a separator that is elongated while folding the separator in a zigzag manner. Each of the electrode sheets includes a current collector foil, and an electrode active material layer provided on one surface of the current collector foil. A principal surface of the electrode active material layer includes protrusions and recesses provided by particulate electrode active materials. The preparing of the electrode sheets each including the joining agent includes preparing the electrode sheets, and transferring the joining agent to part of the principal surface of the electrode active material layer of each of the electrode sheets.

In the above method, the joining agent is transferred to the principal surface of the electrode active material layer, thereby providing the joining agent on the principal surface of the electrode active material layer. In this case, when the principal surface of the electrode active material layer includes the protrusions and the recesses provided by the particulate electrode active materials, the joining agent is transferred only to the principal surface at a portion protruding toward the separator (i.e., the protrusions out of the protrusions and the recesses). Thus, the joining agent can be provided on the principal surface of the electrode active material layer only at the portion protruding toward the separator (i.e., the protrusions out of the protrusions and the recesses).

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing the external appearance of a battery 100 using an electrode stack 10 according to an embodiment;
FIG. 2 is a diagram illustrating that the electrode stack 10 is housed inside an exterior member 102;
FIG. 3 is a diagram schematically showing the configuration of the electrode stack 10 according to the embodiment;
FIG. 4A is an enlarged view of a portion IV(A) in FIG. 3;
FIG. 4B is an enlarged view of a portion IV(B) in FIG. 3;
FIG. 5A is a diagram illustrating that a principal surface 25a of an upper cathode active material layer 24a is joined to a separator 40 via joining agents 50 provided on protrusions 60;
FIG. 5B is a diagram illustrating that a principal surface 35a of an upper anode active material layer 34a is joined to the separator 40 via the joining agents 50 provided on the protrusions 60;
FIG. 6A exemplarily shows several disposition patterns of the joining agents 50 provided on part of the principal surface 25a of the upper cathode active material layer 24a;
FIG. 6B exemplarily shows several disposition patterns of the joining agents 50 provided on part of the principal surface 25a of the upper cathode active material layer 24a;
FIG. 7 is a flowchart illustrating a method for manufacturing the electrode stack 10 according to the embodiment;
FIG. 8 is a diagram illustrating a step of alternately stacking a plurality of electrode sheets 20, 30 including the joining agents 50 and portions of the separator 40; and
FIG. 9 is a diagram illustrating that a side surface 25c of the upper cathode active material layer 24a and a side surface 25d of a lower cathode active material layer 24b are joined to the separator 40 via a joining agent 52.

### DETAILED DESCRIPTION OF EMBODIMENTS

An electrode stack 10 according to an embodiment and a battery 100 employing the electrode stack 10 will be described. The battery 100 is, for example, a lithium-ion secondary battery. The battery 100 has a rectangular, flat plate shape. In the following description, the thickness direction of the battery 100 is referred to as the Z-direction, the longitudinal direction of the battery 100 as the X-direction, and the direction orthogonal to both the Z- and X-directions as the Y-direction.

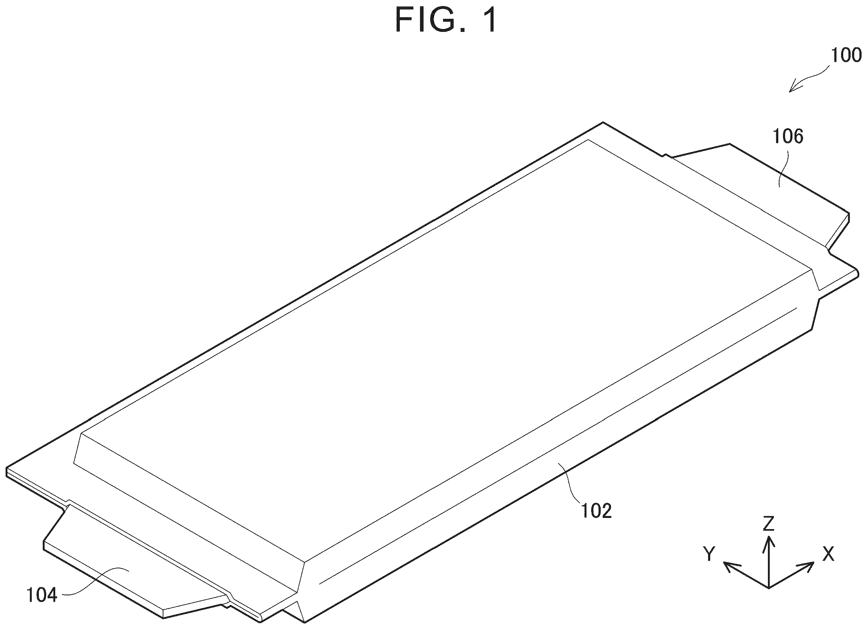

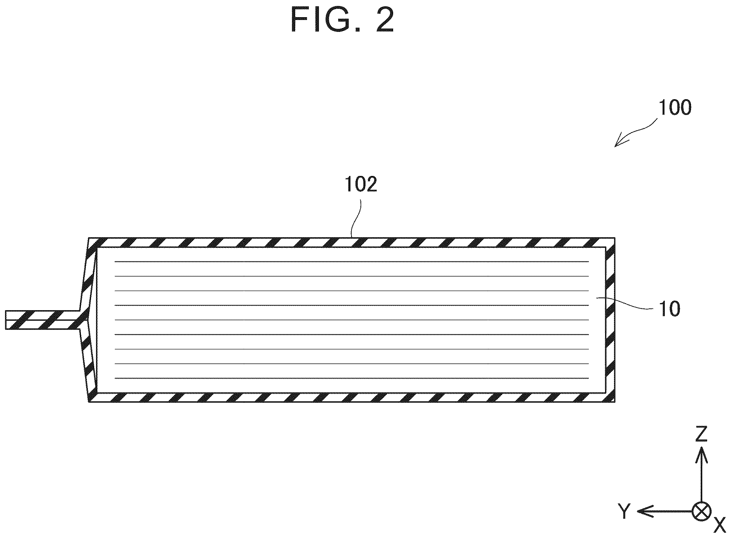

As shown in FIGS. 1 and 2, the battery 100 includes an exterior member 102. The electrode stack 10 is sealed in the exterior member 102 together with an electrolytic solution (not shown). The exterior member 102 is formed of a thin film. For example, the exterior member 102 may be a laminate film in which resin coating films are provided on both surfaces of an aluminum foil.

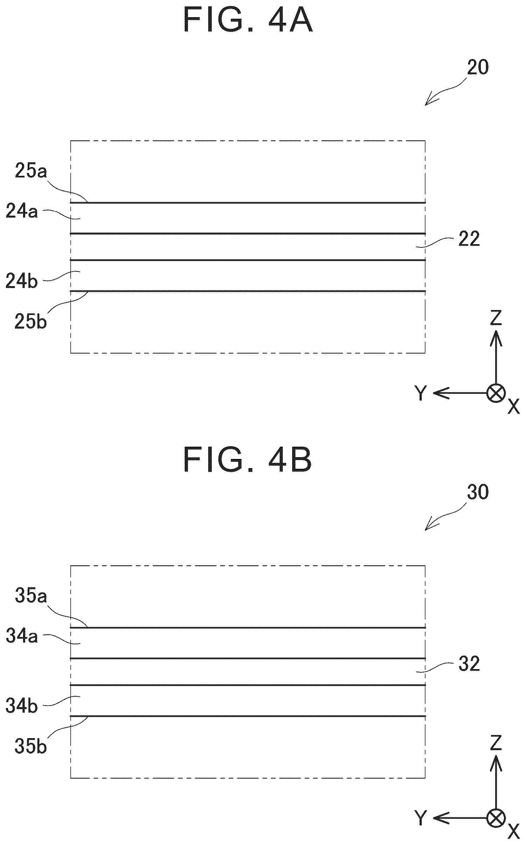

As shown in FIG. 1, the battery 100 further includes a cathode terminal 104 and an anode terminal 106. One end of the cathode terminal 104 is exposed outside the exterior member 102, and the other end of the cathode terminal 104 is connected, inside the exterior member 102, to each cathode current collector foil 22 of the electrode stack 10 (see FIG. 4A). One end of the anode terminal 106 is exposed outside the exterior member 102, and the other end of the anode terminal 106 is connected, inside the exterior member 102, to each anode current collector foil 32 of the electrode stack 10 (see FIG. 4B). The other end of the cathode terminal 104 may be connected to each cathode current collector foil 22 through a corresponding tab formed integrally with that cathode current collector foil 22, or may be connected to each cathode current collector foil 22 through a corresponding tab joined to that cathode current collector foil 22 by welding or another method. Similarly, the other end of the anode terminal 106 may be connected to each anode current collector foil 32 through a corresponding tab formed integrally with that anode current collector foil 32, or may be connected to each anode current collector foil 32 through a corresponding tab joined to that anode current collector foil 32 by welding or another method.

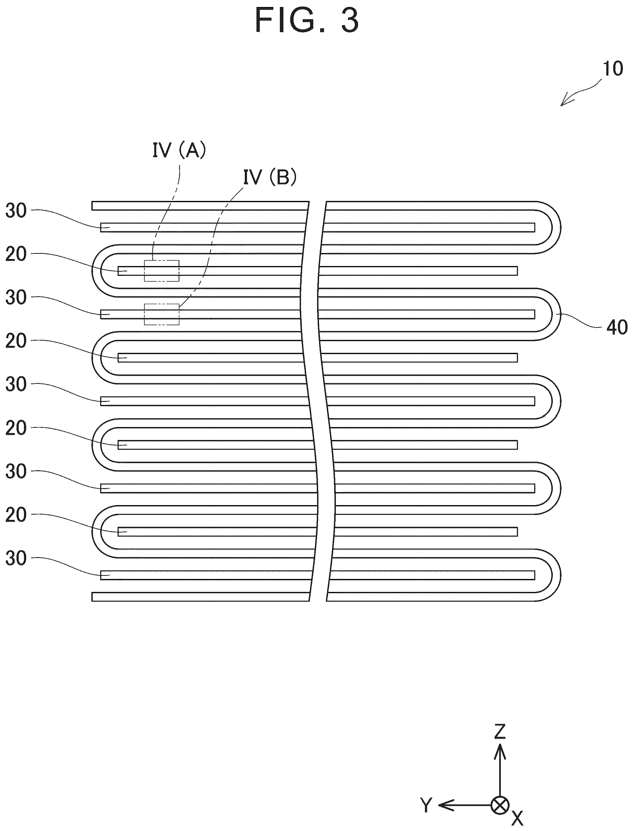

As shown in FIG. 3, the electrode stack 10 includes a plurality of electrode sheets 20, 30 and a separator 40. The electrode sheets 20, 30 are stacked along the Z-direction. Each of the electrode sheets 20, 30 has a rectangular shape when viewed along the Z-direction. The electrode sheets 20, 30 include a plurality of cathode sheets 20 and a plurality of anode sheets 30. In one example, the size of each cathode sheet 20 is smaller than that of each anode sheet 30. The separator 40 is an elongated sheet. The separator 40 extends in a zigzag manner between each adjacent pair of cathode and anode sheets 20, 30. That is, the separator 40 is folded at prescribed intervals by alternating mountain folds and valley folds. The cathode sheets 20 and the anode sheets 30 are alternately stacked, with one cathode sheet 20 and one anode sheet 30 disposed between each pair of folded portions of the separator 40. The number of electrode sheets 20, 30 included in the electrode stack 10 is not particularly limited.

As shown in FIG. 4A, each cathode sheet 20 includes a cathode current collector foil 22 and two cathode active material layers 24a, 24b. Each of the cathode current collector foil 22 and the cathode active material layers 24a, 24b has a rectangular shape when viewed along the Z-direction. In one example, the size of each of the cathode active material layers 24a, 24b is smaller than the size of the cathode current collector foil 22. The cathode current collector foil 22 is, for example, an aluminum foil. The two cathode active material layers 24a, 24b include an upper cathode active material layer 24a and a lower cathode active material layer 24b. The upper cathode active material layer 24a is provided on the surface of the cathode current collector foil 22 on the +Z-direction side. A principal surface 25a of the upper cathode active material layer 24a on the +Z-direction side faces the separator 40 in the Z-direction. The lower cathode active material layer 24b is provided on the surface of the cathode current collector foil 22 on the -Z-direction side. A principal surface 25b of the lower cathode active material layer 24b on the -Z-direction side faces the separator 40 in the Z-direction. The terms "upper" and "lower" in the present specification are used for convenience of description, and do not limit the attitude of the electrode stack 10 during use or manufacturing. The size of the upper cathode active material layer 24a may be the same as or different from the size of the lower cathode active material layer 24b.

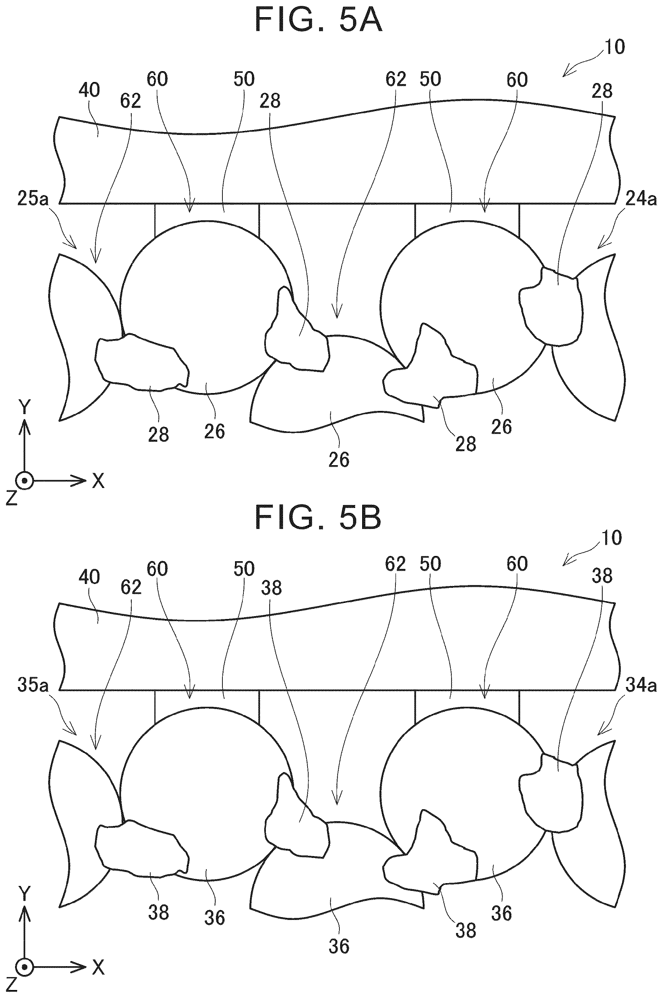

As shown in FIG. 5A, the upper cathode active material layer 24a includes cathode active materials 26 and binders 28. Although illustration is omitted, the lower cathode active material layer 24b also contains cathode active materials and binders. The cathode active materials 26 of the present embodiment are in the form of particles. Therefore, the principal surfaces 25a, 25b of the cathode active material layers 24a, 24b have protrusions and recesses formed by the cathode active materials 26. That is, protrusions 60 protruding toward the separator 40 and recesses 62 spaced away from the separator 40 are formed on the principal surfaces 25a, 25b of the cathode active material layers 24a, 24b.

Examples of the cathode active materials 26 include lithium nickel composite oxides, lithium cobalt composite oxides, and lithium manganese composite oxides. The average particle size of the cathode active materials 26 is not particularly limited, but is, for example, 5 µm or more and 50 µm or less. The average particle size as used herein refers to the particle size (D50) corresponding to 50% of the volume-based cumulative particle size distribution as measured by a laser diffraction and scattering method. The cathode active material 26 may be formed of a single material or of multiple materials. The binders 28 bind the cathode active materials 26 together. Examples of the binders 28 include carboxymethyl cellulose (CMC), styrene butadiene rubber (SBR), polyvinylidene fluoride (PVdF), polytetrafluoroethylene (PTFE), polyacrylic acid (PAA), acrylic resin, and ultra-high molecular weight polyethylene. The binder 28 may be formed of a single material or of multiple materials. Each of the cathode active material layers 24a, 24b may further contain a conductive additive etc.

As shown in FIG. 4B, each anode sheet 30 includes an anode current collector foil 32 and two anode active material layers 34a, 34b. Each of the anode current collector foil 32 and the anode active material layers 34a, 34b has a rectangular shape when viewed along the Z-direction. In one example, the size of each of the anode active material layers 34a, 34b is smaller than the size of the anode current collector foil 32. The anode current collector foil 32 is, for example, a copper foil. The two anode active material layers 34a, 34b include an upper anode active material layer 34a and a lower anode active material layer 34b. The upper anode active material layer 34a is provided on the surface of the anode current collector foil 32 on the +Z-direction side. A principal surface 35a of the upper anode active material layer 34a on the +Z-direction side faces the separator 40 in the Z-direction. The lower anode active material layer 34b is provided on the surface of the anode current collector foil 32 on the -Z-direction side. A principal surface 35b of the lower anode active material layer 34b on the -Z-direction side faces the separator 40 in the Z-direction. The size of the upper anode active material layer 34a may be the same as or different from the size of the lower anode active material layer 34b.

As shown in FIG. 5B, the upper anode active material layer 34a includes anode active materials 36 and binders 38. Although illustration is omitted, the lower anode active material layer 34b also contains anode active materials and binders. The anode active materials 36 of the present embodiment are in the form of particles. Therefore, the principal surfaces 35a, 35b of the anode active material layers 34a, 34b have protrusions and recesses formed by the anode active materials 36. That is, protrusions 60 protruding toward the separator 40 and recesses 62 spaced away from the separator 40 are formed on the principal surfaces 35a, 35b of the anode active material layers 34a, 34b.

Examples of the anode active materials 36 include carbon materials such as graphite, hard carbon, and soft carbon; materials that form alloys with lithium such as silicon (Si); and lithium alloys. The average particle size of the anode active materials 36 is not particularly limited, but is, for example, 5 µm or more and 50 µm or less. The anode active material 36 may be formed of a single material or of multiple materials. The binders 38 bind the anode active materials 36 together. Examples of the binders 38 include carboxymethyl cellulose (CMC), styrene butadiene rubber (SBR), polyvinylidene fluoride (PVdF), polytetrafluoroethylene (PTFE), polyacrylic acid (PAA), acrylic resin, and ultra-high molecular weight polyethylene. The binder 38 may be formed of a single material or of multiple materials. Each of the anode active material layers 34a, 34b may further contain a conductive additive etc.

The separator 40 is configured to allow charge carriers (in this case, lithium ions) to pass therethrough. The separator 40 is formed of a material having insulating properties such as polypropylene or polyethylene. Examples of the separator 40 include porous polyethylene films or porous polypropylene films.

As shown in FIG. 5A, the electrode stack 10 further includes joining agents 50. The joining agents 50 are provided on the principal surface 25a of the upper cathode active material layer 24a of the cathode sheet 20, and join the upper cathode active material layer 24a and the separator 40 together. Although illustration is omitted, the joining agents 50 are also provided on the principal surface 25b of the lower cathode active material layer 24b, and join the lower cathode active material layer 24b and the separator 40 together. This suppresses positional misalignment of the cathode sheet 20 relative to the separator 40. The joining agents 50 may be provided on only one of the upper cathode active material layer 24a and the lower cathode active material layer 24b.

The joining agents 50 are provided on part of the principal surface 25a of the upper cathode active material layer 24a. As described above, the protrusions 60 and the recesses 62 are formed on the principal surface 25a of the upper cathode active material layer 24a due to the particulate cathode active materials 26. On the principal surface 25a having such protrusions and recesses, the joining agents 50 are provided on the protrusions 60 but not on the recesses 62. Therefore, the range of the principal surface 25a of the upper cathode active material layer 24a in which the recesses 62 are formed faces the separator 40 without intermediation of the joining agents 50. Thus, at least part of the charge carriers can move between the upper cathode active material layer 24a and the separator 40 without passing through the joining agents 50. Compared to a related-art configuration in which the joining agents 50 are present on the entire principal surface 25a of the upper cathode active material layer 24a, the movement of the charge carriers is less likely to be hindered by the joining agents 50, and the internal resistance of the battery 100 is reduced. In this way, only part of the principal surface 25a of the cathode active material layer 24a is joined to the separator 40 via the joining agents 50, thereby reducing the influence of the joining agents 50 on the movement of the charge carriers while suppressing the positional misalignment of the cathode sheet 20 relative to the separator 40.

In particular, when the principal surface 25a of the upper cathode active material layer 24a has the protrusions and the recesses described above, a gap is formed between the joining agent 50 and the separator 40 at a portion spaced away from the separator 40 (i.e., the recess 62) even if the joining agents 50 are provided on the entire principal surface 25a. In other words, only the protrusions 60 protruding toward the separator 40 are joined to the separator 40 via the joining agents 50. The joining agents 50 provided in the recesses 62 spaced away from the separator 40 do not function as the joining agents 50, but still hinder the movement of the charge carriers. For this reason, by providing the joining agents 50 only on the protrusions 60 of the principal surface 25a of the upper cathode active material layer 24a that protrude toward the separator 40 as described above, it is possible to both suppress the positional misalignment of the cathode sheet 20 relative to the separator 40 and reduce the influence of the joining agents 50 on the movement of the charge carriers.

Although illustration is omitted, the same applies to the principal surface 25b of the lower cathode active material layer 24b. That is, only part of the principal surface 25b of the lower cathode active material layer 24b is joined to the separator 40 via the joining agents 50. Thus, the influence of the joining agents 50 on the movement of the charge carriers between the lower cathode active material layer 24b and the separator 40 is also reduced.

As shown in FIG. 5B, the joining agents 50 are also provided on the principal surface 35a of the upper anode active material layer 34a of the anode sheet 30, and join the upper anode active material layer 34a and the separator 40 together. Although illustration is omitted, the joining agents 50 are also provided on the principal surface 35b of the lower anode active material layer 34b, and join the lower anode active material layer 34b and the separator 40 together. This suppresses positional misalignment of the anode sheet 30 relative to the separator 40. The joining agents 50 may be provided on only one of the upper anode active material layer 34a and the lower anode active material layer 34b.

As with the cathode active material layers 24a, 24b described above, the joining agents 50 are provided on part of the principal surface 35a of the upper anode active material layer 34a. On the principal surface 35a having the protrusions 60 and the recesses 62, the joining agents 50 are provided on the protrusions 60 but not on the recesses 62. Thus, the influence of the joining agents 50 on the movement of the charge carriers between the upper anode active material layer 34a and the separator 40 is also reduced. Although illustration is omitted, the same applies to the principal surface 35b of the lower anode active material layer 34b. That is, only part of the principal surface 35b of the lower anode active material layer 34b is joined to the separator 40 via the joining agents 50. Thus, the influence of the joining agents 50 on the movement of the charge carriers between the lower anode active material layer 34b and the separator 40 is also reduced.

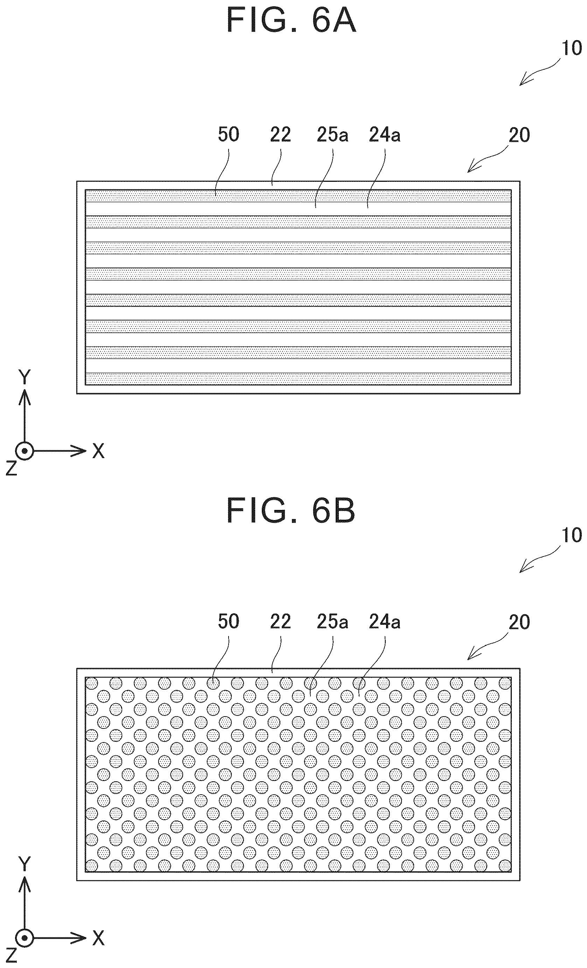

In the present embodiment, the joining agents 50 are provided on the protrusions 60 of the principal surface 25a of the upper cathode active material layer 24a. As shown in FIG. 6A, the joining agents 50 may be provided in stripes on the principal surface 25a of the upper cathode active material layer 24a. Alternatively, as shown in FIG. 6B, the joining agents 50 may be provided in dots on the principal surface 25a of the upper cathode active material layer 24a. In these configurations, the joining agents 50 may be provided on both the protrusions 60 and the recesses 62 of the principal surface 25a of the upper cathode active material layer 24a. The disposition pattern of the joining agents 50 provided on part of the principal surface 25a of the upper cathode active material layer 24a is not particularly limited. In either configuration, part of the principal surface 25a of the upper cathode active material layer 24a is joined to the separator 40 via the joining agents 50. This suppresses the positional misalignment of the cathode sheet 20 relative to the separator 40. The other part of the principal surface 25a of the upper cathode active material layer 24a faces the separator 40 without intermediation of the joining agents 50. Thus, at least part of the charge carriers can move between the cathode active material layer 24a and the separator 40 without passing through the joining agents 50. It is possible to reduce the influence of the joining agents 50 on the movement of the charge carriers while suppressing the positional misalignment of the cathode sheet 20 relative to the separator 40.

The same applies to the other electrode active material layers 24b, 34a, 34b. That is, on each of the principal surfaces 25b, 35a, 35b, the joining agents 50 may be provided in stripes (see FIG. 6A) or in dots (see FIG. 6B). The disposition pattern of the joining agents 50 provided on part of each of the principal surfaces 25b, 35a, 35b is not particularly limited.

The material for the joining agent 50 is not particularly limited. For example, it is appropriate that the joining agent 50 have insulating properties. The joining agent 50 may be formed of a conductive material such as a conductive polymer, metal, or carbon powder. The joining agent 50 may be formed of a single material or of multiple materials. For example, the joining agent 50 may be a known conductive adhesive. The joining agent 50 may be formed of the same material as or of a different material from those for the binders 28, 38 contained in the electrode active material layers 24a, 24b, 34a, 34b. For example, in some embodiments, the electrical resistance of the material for the joining agent 50 provided in each of the cathode active material layers 24a, 24b is smaller than the electrical resistance of the material for the binder 28 contained in each of the cathode active material layers 24a, 24b. With this configuration, the internal resistance of the battery 100 can be further reduced. The same applies to the joining agent 50 provided in each of the anode active material layers 34a, 34b. That is, when the electrical resistance of the material for the joining agent 50 provided in each of the anode active material layers 34a, 34b is smaller than the electrical resistance of the material for the binder 38 contained in each of the anode active material layers 34a, 34b, the internal resistance of the battery 100 can be further reduced. For example, in another embodiment, the joining agent 50 is formed of a material having joining strength at room temperature. With this configuration, the principal surfaces 25a, 25b, 35a, 35b of the electrode active material layers 24a, 24b, 34a, 34b can be joined to the separator 40 via the joining agents 50, for example, without heating the joining agents 50.

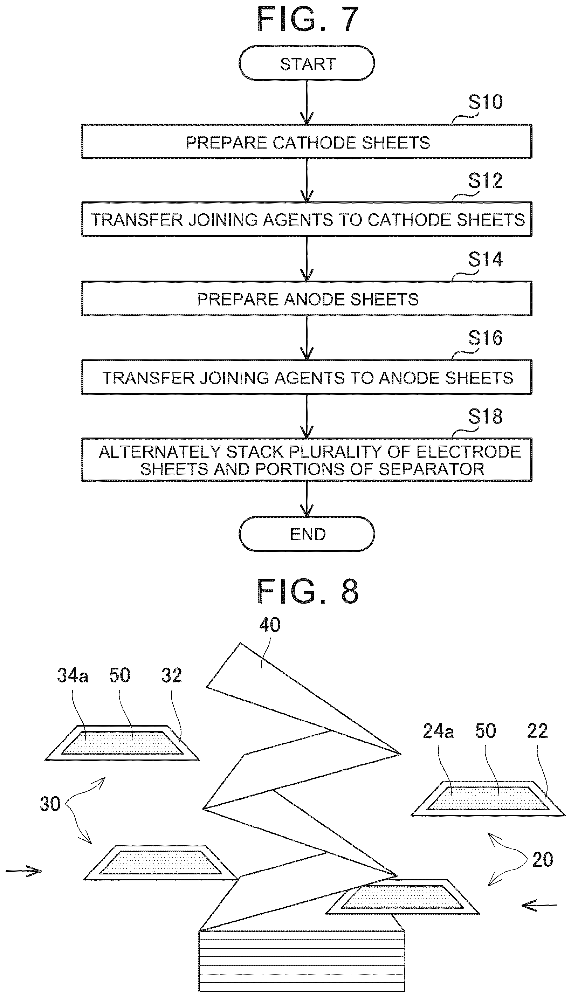

Next, a method for manufacturing the electrode stack 10 will be described with reference to FIGS. 7 and 8. As shown in FIG. 7, the manufacturing method mainly includes steps (S10 to S16) of preparing the electrode sheets 20, 30 including the joining agents 50, and a step (S18) of alternately stacking the electrode sheets 20, 30 including the joining agents 50 and portions of the elongated separator 40 along the Z-direction while folding the separator 40 in a zigzag manner.

The manufacturing method includes a step (S10) of preparing the cathode sheets 20. In each of the cathode sheets 20 prepared in S 10, the upper cathode active material layer 24a and the lower cathode active material layer 24b are provided on the surfaces of the cathode current collector foil 22. The principal surfaces 25a, 25b of the cathode active material layers 24a, 24b have the protrusions and the recesses (i.e., protrusions 60 and recesses 62) formed by the cathode active materials 26 (see FIG. 5A). The method for preparing each cathode sheet 20 is not particularly limited. For example, a solution containing the cathode active materials 26 and the binders 28 may be applied to the surfaces of the cathode current collector foil 22, and then the solvent may be evaporated. For example, the cathode active material layers 24a, 24b may be disposed on the surfaces of the cathode current collector foil 22, and then integrated by pressing.

The manufacturing method includes a step (S12) of transferring the joining agents 50 to part of the principal surfaces 25a, 25b of the cathode active material layers 24a, 24b of each of the cathode sheets 20. In this way, the cathode sheets 20 including the joining agents 50 are prepared. The specific method for transferring the joining agents 50 is not particularly limited. In one example, a base sheet on which the joining agents 50 are disposed may be brought into contact with the principal surfaces 25a, 25b of the cathode active material layers 24a, 24b. As described above, the protrusions 60 and the recesses 62 are formed on the principal surfaces 25a, 25b of the cathode active material layers 24a, 24b due to the particulate cathode active materials 26. Therefore, the joining agents 50 are transferred only to the protrusions 60 of the principal surfaces 25a, 25b of the cathode active material layers 24a, 24b, but not to the recesses 62 (see FIG. 5A). In this way, the joining agents 50 can be provided only on part of the principal surfaces 25a, 25b of the cathode active material layers 24a, 24b. It is appropriate that the joining agents 50 be disposed relatively thinly on the surface of the base sheet. In particular, when the thickness of the joining agents 50 is smaller than the surface roughness of the principal surfaces 25a, 25b, the joining agents 50 can be selectively provided only on the protrusions 60 of the principal surfaces 25a, 25b. The surface roughness as used herein is, for example, the arithmetic mean roughness (Ra) measured in accordance with JIS B 0601: 2013. It is appropriate that the base sheet have a surface that allows the joining agents 50 to be separated easily. For example, the base sheet may be a sheet formed of polytetrafluoroethylene (PTFE), a sheet with a silicon-coated surface, or a sheet with a silica-coated surface.

The manufacturing method includes a step (S14) of preparing the anode sheets 30. In each of the anode sheets 30 prepared in S14, one anode active material layer 34a and one anode active material layer 34b are provided on the surfaces of the anode current collector foil 32. The principal surfaces 35a, 35b of the anode active material layers 34a, 34b have the protrusions and the recesses (i.e., protrusions 60 and recesses 62) formed by the anode active materials 36 (see FIG. 5B). The method for preparing each anode sheet 30 is not particularly limited as with the method for preparing each cathode sheet 20.

The manufacturing method includes a step (S16) of transferring the joining agents 50 to part of the principal surfaces 35a, 35b of the anode active material layers 34a, 34b of each of the anode sheets 30. In this way, the anode sheets 30 including the joining agents 50 are prepared. Therefore, the electrode sheets 20, 30 including the joining agents 50 are prepared by steps S10 to S16. S14 and S16 may be performed before S10 and S12.

S16 is performed in the same manner as S 12. Therefore, in S 16, the joining agents 50 are provided on part of the principal surfaces 35a, 35b of the anode active material layers 34a, 34b, while the joining agents 50 are not provided on the other part of the principal surfaces 35a, 35b (see FIG. 5B). As described in S12, when transferring the joining agents 50, the joining agents 50 are disposed relatively thinly on the surface of the base sheet. Thus, the joining agents 50 can be selectively provided only on the protrusions 60 of the principal surfaces 25a, 25b.

In S 18, as shown in FIG. 8, the separator 40 is folded at prescribed intervals by alternating mountain folds and valley folds, and the cathode sheets 20 and the anode sheets 30 are alternately stacked, with one cathode sheet 20 and one anode sheet 30 disposed between each pair of folded portions of the separator 40. Since the joining agents 50 are provided on part of the principal surfaces 25a, 25b, 35a, 35b of the electrode active material layers 24a, 24b, 34a, 34b, the part of the principal surfaces 25a, 25b, 35a, 35b are joined to the separator 40 via the joining agents 50. A stack in which the electrode sheets 20, 30 and portions of the separator 40 are alternately stacked along the Z-direction may be pressed along the Z-direction.

With the above manufacturing method, it is possible to manufacture the electrode stack 10 that can suppress the positional misalignment of the electrode sheets 20, 30 relative to the separator 40 and reduce the influence of the joining agents 50 on the movement of the charge carriers.

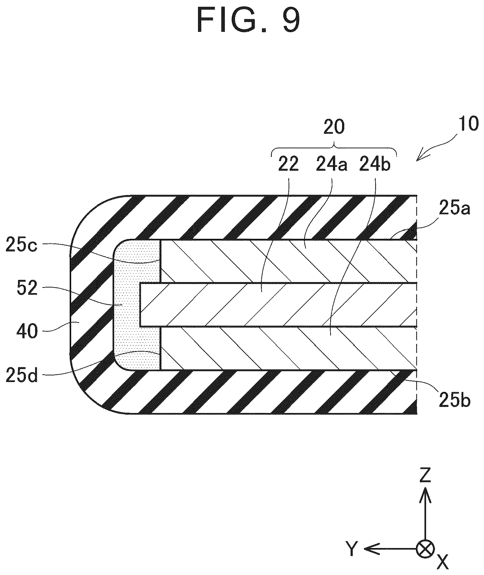

In one example, as shown in FIG. 9, a side surface 25c of the upper cathode active material layer 24a and a side surface 25d of the lower cathode active material layer 24b may be joined to the separator 40 via a common joining agent 52. The side surface 25c of the upper cathode active material layer 24a refers to the surface of the upper cathode active material layer 24a that faces the separator 40 in the Y-direction. The side surface 25d of the lower cathode active material layer 24b refers to the surface of the lower cathode active material layer 24b that faces the separator 40 in the Y-direction. The side surface 25c of the upper cathode active material layer 24a and/or the side surface 25d of the lower cathode active material layer 24b may be entirely joined to the separator 40 via the common joining agent 52. The two side surfaces 25c, 25d may be joined to the separator 40 via separate joining agents 52. Each of the two side surfaces 25c, 25d may be partially joined to the separator 40 via the joining agent 52. One of the two side surfaces 25c, 25d may be joined to the separator 40 via the joining agent 52. In any configuration, the misalignment of the cathode sheet 20 relative to the separator 40 can be further suppressed. In this case, the manufacturing method shown in FIG. 7 may further include a step of providing the joining agent 52 on at least part of the side surfaces 25c, 25d of at least one of the cathode active material layers 24a, 24b of each cathode sheet 20.

In addition to or instead of the above, at least one of the two anode active material layers 34a, 34b may have a side surface that faces the separator 40 in the Y-direction, and at least part of the side surface may be joined to the separator 40 via the joining agent 52. In this case, the manufacturing method shown in FIG. 7 may further include a step of providing the joining agent 52 on at least part of the side surface of at least one of the anode active material layers 34a, 34b of each anode sheet 30.

The material for the joining agent 52 is not particularly limited. It is appropriate that the joining agent 52 have insulating properties. The joining agent 52 may be formed of a conductive material such as a conductive polymer, metal, or carbon powder. The joining agent 52 may be formed of a single material or of multiple materials. The joining agent 52 may be formed of the same material as or of a different material from those for the binders 28, 38 contained in the electrode active material layers 24a, 24b, 34a, 34b.

In the present embodiment, each of the electrode sheets 20, 30 has the electrode active material layers 24a, 24b, 34a, 34b on its both surfaces. However, in another embodiment, at least one of the electrode sheets 20, 30 may have a single electrode active material layer on its one surface.

Although some specific examples have been described in detail above, these are merely illustrative and do not limit the scope of the claims. The technology described in the claims includes various modifications and alterations of the specific examples illustrated above. The technical elements described in the present specification or in the drawings exhibit technical utility either individually or in combination.

## Claims

1. An electrode stack (10) comprising:
a plurality of electrode sheets (20,30) stacked along a first direction; and
a separator (40) that is elongated and extends in a zigzag manner between the electrode sheets, wherein:
each of the electrode sheets (20,30) includes a current collector foil (22,32), and an electrode active material layer (24a,24b,34a,34b) provided on one surface of the current collector foil and including a principal surface (25a,25b,35a,35b) that faces the separator in the first direction;
part of the principal surface of the electrode active material layer is joined to the separator via a joining agent (50); and
the other part of the principal surface of the electrode active material layer faces the separator without intermediation of the joining agent.

2. The electrode stack according to claim 1, wherein:
the electrode active material layer (24a,24b,34a,34b) further includes particulate electrode active materials, and binders that bind the particulate electrode active materials together; and
an electrical resistance of a material for the joining agent is smaller than an electrical resistance of a material for the binders.

3. The electrode stack according to claim 1 or 2, wherein:
the principal surface (25a,25b,35a,35b) of the electrode active material layer (24a,24b,34a,34b) includes protrusions (60) and recesses (62) provided by particulate electrode active materials; and
the joining agent (50) is provided on the principal surface of the electrode active material layer at a portion protruding toward the separator, and is not provided at a portion spaced away from the separator.

4. The electrode stack according to any one of claims 1 to 3, wherein:
the electrode active material layer (24a,24b) further includes a side surface (25c,25d) that faces the separator in a second direction orthogonal to the first direction; and
at least part of the side surface (25c,25d) of the electrode active material layer is joined to the separator via the joining agent.

5. A method for manufacturing an electrode stack, the method comprising:
preparing a plurality of electrode sheets (20,30) each including a joining agent (50); and
alternately stacking, along a first direction, the electrode sheets each including the joining agent and portions of a separator (40) that is elongated while folding the separator in a zigzag manner, wherein:
each of the electrode sheets includes a current collector foil (22,32), and an electrode active material layer (24a,24b,34a,34b) provided on one surface of the current collector foil;
a principal surface (25a,25b,35a,35b) of the electrode active material layer includes protrusions (60) and recesses (62) provided by particulate electrode active materials; and
the preparing of the electrode sheets each including the joining agent includes preparing the electrode sheets, and transferring the joining agent to part of the principal surface of the electrode active material layer of each of the electrode sheets.
